(19) Europäisches Patentamt
European Patent Office
Office européen des brevets

(11) EP 0 547 504 B1

(12) EUROPÄISCHE PATENTSCHRIFT

(45) Veröffentlichungstag und Bekanntmachung des Hinweises auf die Patenterteilung:
**28.02.1996 Patentblatt 1996/09**

(51) Int Cl.$^6$: **C09J 123/02**, C09J 133/06
// C09J151/00,(C09J123/02, 133:06),
(C09J133/06, 123:02)

(21) Anmeldenummer: **92121051.4**

(22) Anmeldetag: **10.12.1992**

# (54) Verfahren zur Heissversiegelung mit einem heisssiegelfähigen Beschichtungsmittel

Method for heat-sealing with a heat-sealable coating material

Procédé pour souder à chaud avec un matériel de revêtement soudable à chaud

(84) Benannte Vertragsstaaten:
**AT BE CH DE DK ES FR GB IE IT LI NL PT SE**

(30) Priorität: **18.12.1991 DE 4141692**

(43) Veröffentlichungstag der Anmeldung:
**23.06.1993 Patentblatt 1993/25**

(73) Patentinhaber: **Röhm GmbH**
**D-64293 Darmstadt (DE)**

(72) Erfinder:
- **Göldner, Ernst, Dr.**
  **W-7940 Riedlingen (DE)**
- **Rossberg, Peter, Dr.**
  **W-6104 Seeheim-Jugenheim (DE)**
- **Wicke, Michael**
  **W-6104 Seeheim-Jugenheim (DE)**
- **Elser, Wilhelm**
  **W-6103 Griesheim (DE)**

(56) Entgegenhaltungen:
**EP-A- 0 129 178** **DE-A- 3 306 202**
- **PATENT ABSTRACTS OF JAPAN vol. 8, no. 34 (C-210)(1471)**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 547 504 B1

## Beschreibung

Die Erfindung betrifft ein Verfahren zur Heißversieglung eines Kunststoffuntergrunds gegen einen Metalluntergrund mit einem heißsiegelfähigen Beschichtungsmittel.

Stand der Technik

Das Problem eines Verbundes zwischen Metallen und Kunststoff ist ein in der Technik von Verpackungen oder im Maschinenbau häufig genanntes und immer wiederkehrendes.

So ist beispielsweise der Verbund zwischen Aluminium und bestimmten Kunststoffen, wie Polyolefinen, Polystyrol oder Polyvinylchlorid problematisch.

Für solche Verbunde wird die Methode des Heißsiegelns angewendet. Aus dem Stand der Technik sind beispielsweise heißsiegelfähige Pfropfpolymerisate von Polyolefinen bekannt.

Beispielsweise können carboxylgruppenhaltige Polyolefine mit Hafteigenschaften durch Pfropfung von Acrylsäure auf Ethylen-Propylen-Coplymere (vgl. JP-OS 79 90 346, JP-OS 76 104 954) oder auf Ethylen-Alkylacrylat-Copolymere (vgl. DE-OS 26 06 389, BE-PS 875 974) erhalten werden.

Stabile Suspensionen von carboxylgruppenhaltigen Pfropfpolymerisaten in einem organischen Lösungsmittel erhält man durch schnelles Abkühlen einer Lösung des Pfropfpolymerisats in dem organischen Lösungsmittel (EP-A 47 705 = US 4 382 137). Zu dieser Suspension wird gepulvertes Polyolefin oder mit Acrylsäure gepfropftes Polyolefin zugesetzt, womit eine stabile Suspension mit 10 bis 25 Gew.-% Polymergehalt resultiert.

Ferner sind aus der DE-OS 31 26 451 (= US 4 501 133) modifizierte Polyolefinklebstoffmischungen bekannt, die (a) 0,1 bis 40 Gew.-Teile eines Pfropfcopolymeren aus etwa 70 bis 99,999 Gew.-% einer Polyethylengrundlage, die mit etwa 30 bis 0,001 Gew.-% wenigstens eines als Pfropfast-Grundlage dienenden Monomeren, das seinerseits aus wenigstens einer polymerisierbaren, ethylenisch ungesättigten Carbonsäure oder einem entsprechenden Carbonsäureanhydrid eine Gesamtmenge von 100 Gew.-% erreicht und (b) etwa 99,9 bis 60 Gew.-Teile eines einzumischenden Harzgemisches aus etwa 25 bis 75 Gew.-% eines linearen Polyethylens niederiger Dichte und etwa 75 bis 25 Gew.-% eines Polypropylens bis zur Gesamtmenge von 100 Gew.-% enthalten. Beide Polymergrundlagen entsprechen demnach als Polyolefine demselben Polymertyp. Eine Anwendung als Dispersionsform läßt sich der DE-OS nicht entnehmen.

EP-PS 129 178 (= US 4 753 708) beschreibt ein heißsiegelfähiges, zur Versiegelung verschiedenartiger Untergründe geeignetes Beschichtungsmittel bestehend aus einer filmbildenden Dispersion mindestens zweier verschiedener Polymertypen mit jeweils unterschiedlichen Hafteigenschaften in einem organischen Lösungmsittel, wobei der eine Polymertyp ein Olefinpolymer oder Olefincopolymer, der andere Polymertyp ein Acrylharz darstellt und wobei mindestens eine der Polymertypen bei Raumtemperatur mit dem organischen Lösungsmittel mischbar ist, beide Polymertypen jeweils eine Säurezahl von 0 bis 160 mg KOH pro Gramm Polymerisat besitzen und die Dispersion außer den beiden Polymertypen ein aus Komponenten, die beiden Polymertypen entsprechen, aufgebautes Polymerisat enthält.

Aufgabe

Im dargestellten Stand der Technik wird versucht, die Forderung nach genügender Haftung auf Metalloberflächen durch Co- bzw. Pfropfpolymerisation mit bekannten haftungsvermittelnde Gruppen enthaltenden Monomeren, wie insbesondere der Carboxylgruppe, zu erfüllen.

Die Polymerisate werden allgemein in fester Form auf die zu fügenden bzw. zu beschichtenden Flächen aufgebracht und in bekannter Weise thermisch gefügt bzw. gesiegelt. Die vorgeschlagenen Polymersuspensionen in organischen Lösungsmitteln setzen ein zweistufiges Herstellungsverfahren voraus, bei dem zunächst eine Polymerlösung thermisch abgeschreckt und darin ein weiteres Polymeres in Pulverform eingetragen wird. Die Temperaturen, auf die die Polymerlösung im ersten Schritt erhitzt werden, müssen hierbei zur Lösung des Polymerisats ausreichen. Der Zwang zum jähen Abkühlen eines solchen Systems (= thermisches Abschrecken) stellt - insbesondere im technischen Maßstab - eine Belastung des Verfahrens dar. Anschließend muß das Polymere in Pulverform mit einem bestimmten Verteilungsgrad der so hergestellten Suspension beigemischt werden, wobei offenbar für jedes Polymer/Lösungsmittel-System besondere Randbedingungen zu gelten haben.

Das Bedürfnis nach einem heißsiegelfähigen Beschichtungsmittel aus mehreren Polymerkomponenten, welche gegenüber verschiedenartigen Haftuntergründen in differenzierter Weise Haftfähigkeit entwickeln, wird vom EP-PS 129 178 (= US 4 753 708) erfüllt. Dort wird ein heißsiegelfähiges, zur Versiegelung verschiedenarter Untergründe geeignetes Beschichtungsmittel vorgeschlagen.

Es besteht aus einer filmbildenden Dispersion mindestens zweier verschiedener Polymertypen mit jeweils unterschiedlichen Hafteigenschaften in einem organischen Lösungsmittelsystem, wobei der eine Polymertyp ein Olefinpolymer oder Olefincopolymer, der andere Polymertyp ein Acrylharz darstellt und wobei mindestens eine der Polymertypen bei Raumtemperatur mit dem organischen Lösungsmittelsystem unbegrenzt mischbar ist, beide Polymertypen jeweils

eine Säurezahl von 0 bis 160 mg KOH pro Gramm Polymerisat besitzen und die Dispersion außer den beiden Polymertypen ein aus Komponenten, die beiden Polymertypen entsprechen, aufgebautes Polymerisat enthält. Dieses von der Praxis sehr gut aufgenommene Beschichtungsmittel führt bei Siegelversuchen von beschichteten Aluminiumfolien gegen Polypropylen-Folien zu Siegelnahtfestigkeiten von 8 N oder mehr bei Verwendung eines chlorhaltigen Primers (Vinylite ® VMCH) und zu Siegelnahtfestigkeiten von 7,6 N ohne Verwendung dieses Primers. Gleichzeitig ist die Wasserfestigkeit dieses Systems schlecht.

Es bestand daher das Bedürfnis nach einem hießsiegelfähigen Beschichtungsmittel aus mehreren Polymerkomponenten, welches gegenüber verschiedenartigen Haftuntergründen in differenzierter Weise Haftfähigkeit entwickelt, mit möglichst geringem technischen Aufwand herstellbar ist und ohne die Verwendung von Primern sehr gute Siegelnahtfestigkeit im Verbund Metalluntergrund/Beschichtungsmittel/Kunststoffuntergrund aufweist.

Lösung

Zur Lösung der vorliegenden Aufgabe wird ein heißsiegelfähiges, zur Versiegelung verschiedenartiger Untergründe geeignetes Beschichtungsmittel vorgeschlagen, bestehend aus einer filmbildenden Dispersion mindestens zweier verschiedener Polymertypen A und X mit jeweils unterschiedlichen Hafteigenschaften in einem organischen Lösungsmittelsystem L, wobei der eine Polymertyp A ein Olefinpolymer oder Olefincopolymer ohne haftvermittelnde Gruppe, insbesondere ohne Säuregruppen, der andere Polymertyp X ein Acrylharz mit einer Säurezahl von 0 bis 120 mg KOH darstellt und wobei mindestens eine der Polymertypen bei Raumtemperatur mit dem organischen Lösungsmittelsystem L unbegrenzt mischbar ist und die Dispersion außer den beiden Polymertypen A und X ein aus Komponenten, die beiden Polymertypen entsprechen, aufgebautes Polymerisat enthält.

Die Säurezahl der Polymeren ist definiert als die Menge an Kaliumhydroxid (KOH), die genügt um 1 g des Polymerisats zu neutralisieren (vgl. F. de Snell & L.S. Ettre in Encyclopedia of Industrial Chemical Analysis, Vol. 8, pp. 389 - 395, Interscience Publishers, 1969).

Die Verschiedenartigkeit der Polymertypen A und X beruht darauf, daß sie aus verschiedenartigen Monomertypen aufgebaut sind. Sie sind beispielsweise im allgemeinen in Lösungsmitteln nicht miteinander kompatibel.

Erfindungsgemäß handelt es sich beim Polymertyp A um Polyolefine und Olefincopolymerisate ohne haftvermittelnde Gruppen und bei dem Polymertyp X um Polymethacrylate bzw. Polyacrylate (Acrylharze), die haftvermittelnde Gruppen aufweisen. Das erfindungsgemäß zusätzlich anwesende, aus beiden Polymertypen A und X aufgebaute Polymerisat, kann ein Pfropf- oder Blockcopolymerisat darstellen.

Im allgemeinen steht die Gesamtheit der Polymereinheiten vom Typ A zu der Gesamtheit der Polymertypen X in der Dispersion im Gewichtsverhältnis 1 zu 5 bis 50 zu 1.

Die erfindungsgemäß einzusetzenden Pfropf- oder Blockcopolymerisate entsprechen dem Typ I

$$A' - X' \qquad I$$

worin A' für ein Segment aus Olefincopolymerisatsequenzen, hydrierte Polyisopren-Sequenzen oder hydrierten Copolymeren aus Butadien/Isopren besteht. Die erfindungsgemäß zu verwendenden Olefinpolymerisate und - copolymerisate entsprechend A sind an sich bekannt. In erster Linie handelt es sich um aus Ethylen, Propylen, Butylen und/oder weiteren Olefinen mit 5 bis 20 Kohlenstoffatomen aufgebaute Polymerisate. Das Molekulargewicht liegt im allgemeinen bei 10 000 bis 300 000, vorzugsweise zwischen 50 000 und 150 000 Dalton.

Solche Olefincopolymerisate (OCP) sind beispielsweise in den deutschen Offenlegungsschriften DE-OS 16 44 941 (= US 3 598 738), DE-OS 17 69 834 (= US 3 551 336), DE-OS 19 63 039 (= US 3 691 078) und DE-OS 20 59 981 (= US 3 652 515) beschrieben. Stellt A' ein Segment aus einem hydrierten Polyisopren dar, so sind käufliche Blockcopolymere auf der Basis eines selektiv hydrierten Polyisopren/Polystyrol (z.B. das Handelsprodukt Shellvis ® 50) bevorzugt.

Besonders bevorzugt sind Ethylen-Propylen-Copolymere.

Desweiteren sind Terpolymere unter Zusatz der bekannten Terkomponenten wie Ethylidennorbornen (vgl. Macromolecular Reviews Vol. 10, 1975) oder Dicyclopentadien möglich; es ist jedoch deren Neigung zur Vernetzung bei thermischer und/oder oxidativer Alterung zu berücksichtigen. Die Verteilung der Monomereinheiten kann dabei weitgehend statistisch sein, es können aber auch mit Vorteil Sequenzpolymere mit Ethylenblöcken zur Anwendung kommen.

Das Verhältnis der Monomeren Ethylen und Propylen ist innerhalb gewisser Grenzen variabel, die bei etwa 95 % sowohl für Ethylen als auch für Propylen als obere Grenze angesetzt werden können.

Das Polymerisat X bzw. das Segment X'in Formel I besteht aus Polyacrylat- und/oder Polymethacrylat-Sequenzen. Diese sind, für sich genommen, z.B. in Form eines entsprechenden Homo- oder Copolymerisats, im Lösungsmittelsystem L löslich. Das Polymerisat X bzw. das Segment X' ist im allgemeinen zu mehr als 50 Gew.-%, vorzugsweise zu 80 bis 100 Gew.-% aufgebaut aus Monomeren der Formel II:

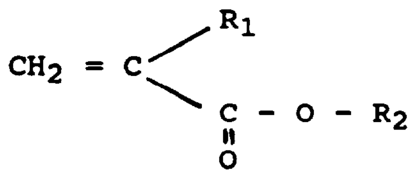 II

worin $R_1$ für Wasserstoff oder Methyl und $R_2$ für einen Alkylrest, einen araliphatischen oder aromatischen Rest mit 1 bis 30, vorzugsweise 1 bis 20 Kohlenstoffatomen steht.

Im Polymer X bzw. im Segment X' können ferner enthalten sein: Monomere der Formel III:

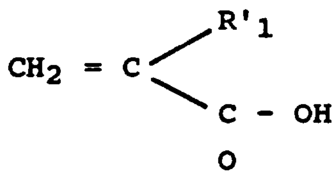 III

worin $R'_1$ für Wasserstoff oder Methyl steht und/oder polymerisationsfähige Säureanhydride und/oder Monomere der Formel IV:

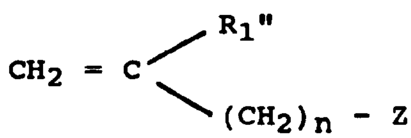 IV

worin $R_1''$ für Wasserstoff oder Methyl und Z für einen gegebenenfalls alkylsubstituierten Phenylrest, einen

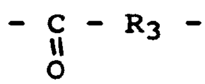

Rest, einen

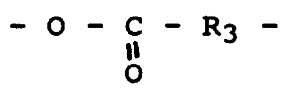

Rest oder einen - O - $R_4$ - Rest steht, wobei $R_3$ und $R_4$ für einen gegebenenfalls verzweigten Alkylrest mit 1 bis 20 Kohlenstoffatomen oder für einen Phenylrest und n für 0 oder 1 steht,
und/oder Monomere der Formel V:

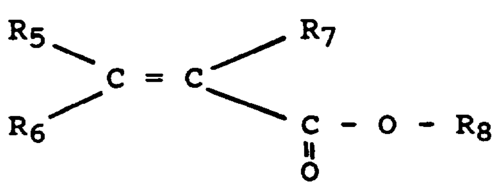 V

worin $R_5$ und $R_6$ für Wasserstoff oder einen Rest

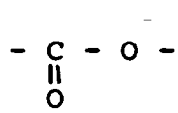

$R'_8$, $R_7$ für Wasserstoff oder einen Rest

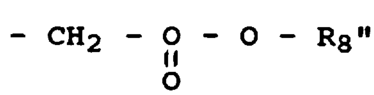

steht, mit der Maßgabe, daß die Verbindung der Formel V zwei carboxylhaltige Gruppen enthalten muß und worin $R_8$, $R'_8$ und $R_8''$ für Wasserstoff oder für einen gegebenenfalls verzweigten Alkylrest mit 1 bis 20 Kohlenstoffatomen oder Phenyl stehen.

Das Polymere X bzw. das Segment X' kann gegebenenfalls noch Anteile der Monomeren der Formel VI enthalten:

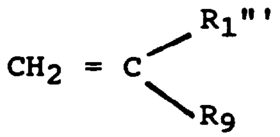

VI

worin $R_1'''$ die Bedeutung von $R_1$ besitzt und $R_9$ für einen stickstoffhaltigen funktionellen Rest wie einen - C = N - Gruppe, eine Gruppe

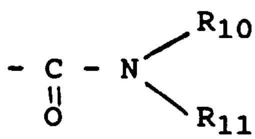

,

worin $R_{10}$ und $R_{11}$ unter Einbeziehung des Stickstoffs einen heterocyclischen 5- oder 6-Ring bilden oder worin $R_9$ für einen (inerten) heterocyclischen Rest, insbesondere einen Pyridin-, Pyrrolidin-, Imidazol-, Carbazol- oder Lactam-Rest bzw. alkylierte Derviate derselben steht oder $R_9$ die Bedeutung $-CH_2OH$ besitzt oder worin $R_9$ die Bedeutung

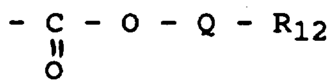

besitzt, worin Q für einen gegebenenfalls substituierten Alkylenrest mit 2 bis 8 Kohlenstoffatomen und $R_{12}$ für -OH oder für - $OR_8'''$ steht, wobei
$R_8'''$ die gleiche Bedeutung wie $R_8$ besitzt. Desweiteren können Monomere der Formel VII anwesend sein:

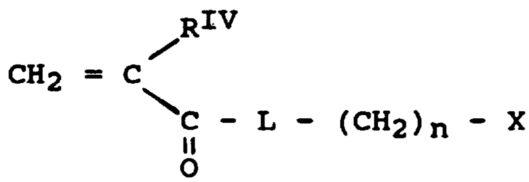

VII

wobei

| | |
|---|---|
| $R^{IV}$ | die Bedeutung von $R_1$ besitzt, |
| L = | -O-, -NH-, $-NR_{13}-$ |
| X = | $-NH_2$, $-NHR_{14}$, $-N(R_{14})_2$, wobei die Substituenten $(R_{14})_2$ zusammen mit dem Stickstoffatom, gegebenenfalls unter Einbeziehung eines weiteren Heteroatoms, einen heterocyclischen 6 bis 6-Ring bilden können, oder |
| = | $-Si(R_{15})_3$ |
| n = | 1 bis 10 |
| mit $R_{13}$ = | Wasserstoff, n-Alkyl mit 1 bis 10 Kohlenstoffatomen |
| $R_{14}$ = | n-Alkyl mit 1 bis 10 Kohlenstoffatomen ggf. subst. Cycloalkyl mit 3 - 8 Ring-Kohlenstoffatomen |
| $R_{15}$ = | Alkyl mit 1 bis 10 Kohlenstoffatomen |
| = | $-O-R_{16}$, worin $R_{16}$ = Alkyl mit 1 bis 10 Kohlenstoffatomen |

darstellt.

Der Anteil der Monomeren II bis VII am Polymerisat X bzw. am Segment X' liegt im allgemeinen zwischen 1 und 50 Gew.%, vorzugsweise zwischen 1 und 15 Gew.-%, bezogen auf die Monomeranteile im Polymerisat X bzw. im Segment X'. Der Anteil der Monomeren der Formeln III und/oder VI am Polymerisat X bzw. am Segment X' wird im allgemeinen 15 Gew.-% nicht überschreiten, in der Regel liegt er bei 1 bis 10 Gew.-%, vorzugsweise bei 1 bis 6 Gew.-%. Als Beispiele der Monomeren IV und V seien besonders genannt: Styrol, $\alpha$-Methylstyrol, Vinylacetat, Vinylstearat, Vinylmethylketon, Vinylisobutylether, Allylacetat, Allylisobutylether, Allylmethylketon, Dibutylmaleinat, Dilaurylmaleinat, Dibutylitaconat. Als Monomere der Formel VI seien C- und N-Vinylpyridin, sowie Vinylpyrrolidin, Vinylpyrrolidon, Vinylcarbazol, Vinylimidazol sowie deren Alkylderivate, insbesondere die N-Vinylverbindungen genannt, ebenso die Hydroxyester der Acryl- bzw. der Methacrylsäure, Hydroxyethyl(meth)acrylat oder 3-Hydroxypropyl(meth)acrylat.

Beispielhaft für Monomere der Formel VII seien Dialkylaminoalkylester der Acryl- bzw. der Methacrylsäure, speziell Dimethylaminoethyl(meth)acrylat oder Dimethylaminopropyl(meth)acrylat, oder 3-Trimethoxysilyloxypropyl(meth)acrylat genannt.

Die Segmente A' und X' in Formel I stehen im allgemeinen im Gewichtsverhältnis 1 zu 20 bis 20 zu 1, vorzugsweise 1 zu 4 bis 4 zu 1. Im allgemeinen enthalten die erfindungsgemäßen Beschichtungsmittel in Form der OCP-Dispersionen das Pfropf- oder Blockcopolymerisat A'- X' in Konzentrationen von 1 bis 80 Gew.-%, vorzugsweise 5 bis 10 Gew.-%.

Die Herstellung der Polymerdispersionen kann beispielsweise gemäß den deutschen Patentanmeldungen P 32 07 291.0 bzw. P 32 07 292.9 vorgenommen werden.

Herstellung der Polymerisate A' - X'

Das Pfropf- oder Blockcopolymerisat A' - X' wird in der Regel hergestellt, indem man mit Hilfe eines geeigneten Emulgators eine Dispersion aus der Komponente A herstellt und auf diese die Komponente X unter geeigneten Reaktionsbedingungen aufpfropft.

Der Emulgator kann einen dem System A' - X' gemäß Formel I ähnlichen Aufbau besitzen, was im weiteren formelhaft durch A"- X" (Formel IA) Ausdruck findet. Die Verfahren zur Herstellung geeigneter Emulgatoren vom Typ A" - X" sind an sich bekannt. So kann z.B. nach der Methode der Übertragungspfropfung verfahren werden (vgl. Houben-Weyl, Methoden der org. Chemie, 4. Aufl., Bd. 14/1, S. 114).

Dazu stellt man eine 10 bis 50 %ige, vorzugsweise 20 bis 30 %ige Lösung eines OCP in einem unter Polymerisationsbedingungen inerten Lösungsmittel her, das im Normalfall einen Siedepunkt oberhalb oder entsprechend der Verfahrenstemperatur besitzt. Hierfür kommen beispielsweise Butylacetat, aliphatische, cycloaliphatische oder aromatische Kohlenwasserstoffe in Frage. Zu diesen OCP-Lösungen werden die Monomeren der Formel II eventuell zuzüglich anderer Monomerer der Formel III bis VI in den angegebenen Verhältnissen zugegeben und unter Zusatz eines oder mehrerer, vorzugsweise peroxidischer Radikal-Initiatoren bei Temperaturen von 60 bis 150 Grad C innerhalb gewöhnlich 4 bis 8 Stunden polymerisiert, wobei vollständiger Umsatz angestrebt wird. Als Radikal-Initiatoren finden vorzugsweise Perester, wie tert.-Butylperoctoat Verwendung, gewöhnlich in Konzentrationen von 0,2 bis 3 Gew.-% bezogen auf das Polymerisat.

Zur Einstellung der gewünschten Molekulargewichte der Segmente X" können Molekulargewichtsregler mitverwendet werden. Hierfür eignen sich beispielsweise Schwefelregler, insbesondere mercaptogruppenhaltige Regler, wie z.B. Dodecylmercaptan, wobei die Reglerkonzentration im allgemeinen bei 0,1 bis 1,0 Gew.-% bezogen auf das Gesamtpolymerisat liegt. Eine weitere Methode zur Herstellung der Pfropfpolymerisate A" - X" stellt die Hydroperoxidation eines OCP im ersten Schritt dar, wobei die auf diese Weise gebildeten, kettenständigen Hydroperoxidgruppen in einer folgenden Stufe die Pfropfpolymerisate der Vinylmonomeren initiieren können (vgl. H.A.J. Batterd, G.W. Tregear, Polymer Reviews, Vol. 16, Interscience, 1967).

Die anionische Polymerisation stellt beispielsweise ein Verfahren zur Herstellung geeigneter Blockpolymerisate dar. So kann beispielsweise Isopren oder Butadien mit einem geeigneten anionischen Initiator (z.B. einer metallorganischen Verbindung) polymerisiert und die "lebenden" anionischen Polymerkettenenden z.B. mit Alkylmethacrylat und/oder Styrol umgesetzt werden. Die solchermaßen hergestellten Polymerisate werden unter Bedingungen hydriert, unter denen die vorhandenen funktionellen Gruppen nicht angegriffen werden. Bezüglich der Herstellung sei auf folgende Literatur verwiesen: Houben-Weyl, Methoden der org. Chemie, 4. Aufl., 14/1, Seiten 110 ff; Block Copolymers: D.C. Allport, W.H. Janes Appl. Sci. Publishers Ltd., London, 1973; Graft Copolymers: H.A.J. Battaerd, G.W. Tregear, Polymer Reviews, Vol. 16 (1967); Block- and Graft Polymers: W.J. Burlant, A.S. Hoffmann, Reinhold Publishers Corp., New York, 1960.

Das Lösungsmittelsystem L

Die für das Lösungsmittelsystem L zu verwendenden Lösungsmittel sind so auszuwählen, daß sie den Erfordernissen der Beschichtungstechnologie für Kunststoffe und Metalle entsprechen. Die - gegebenenfalls im Gemisch - anzuwendenden Lösungsmittel sollen inert und im ganzen unbedenklich sein, wobei der Siedepunkt 250 Grad C bei 760 Torr nicht überschreitet.

Hierfür kommen beispielsweise Ketone wie Methylethylketon und Cyclohexanon, Alkohole wie Isopropanol und n-Butanol, Ether wie 1,4-Dioxan und Ester wie Ethylglykolacetat und Propylacetat sowie Mischungen aus Alkanen mit 1 bis 15 Kohlenstoffatomen bzw. gegebenenfalls substituierten Cycloalkanen mit 3 bis 8 Ring-Kohlenstoffatomen und Estern, wie oben angeführt, infrage. Im allgemeinen wird das Lösungsmittelsystem L so ausgewählt, daß es die Fähigkeit besitzt eine Dispersion aus den Komponenten A, X und dem Pfropf- bzw. Blockcopolymerisat A' - X' zu bilden.

Bei der Auswahl von L ist auch auf die Verträglichkeit zwischen den Polymerkomponenten A und X zu achten. Im Falle der Unverträglichkeit zwischen A und X kann L für beide Komponenten ein gleich gutes Lösungsmittel darstellen, die Dispersion bildet sich dann aufgrund der Unverträglichkeit. Im Falle der Verträglichkeit zwischen A und X muß L so gewählt werden, daß es bei gegebener Temperatur für X ein besserers Lösungsmittelsystem als für A darstellt, die Dispersion bildet sich dann aufgrund der unterschiedlichen Lösungsqualität. Erfindungsgemäß wird als Lösungsmittel L vorzugsweise ein solches gewählt, das die Olefincopolymerisate im Temperaturbereich zwischen 40 und 150 Grad C auf 5 bis 300 Gew.-% anquellen läßt ("Quellungsgrad"). Der Quellungsgrad ist folgendermaßen definiert: Ein OCP-Film

von 1 mm Dicke, 2 cm Länge, 0,5 cm Breite mit bekanntem Gewicht wird bei einer definierten Temperatur - im beispielhaft belegten Falle bei 90 Grad C - in das Lösungsmittel eingetaucht und 24 Stunden lang isotherm gelagert, mit der Pinzette der Lösung entnommen, mittels eines Filterpapiers von anhaftendem Quellungsmittel befreit und unmittelbar anschließend gewogen. Als Maß für die Quellung wird die Gewichtszunahme in Prozent, bezogen auf das Ausgangsgewicht, definiert.

Die Quellungsmessung soll bei der Temperatur, bei der die konzentrierte OCP-Dispersion hergestellt werden soll, durchgeführt werden. Erfindungsgemäß soll bei dieser Temperatur die Quellung 5 bis 300 Gew.-% betragen.

Voraussetzung für die Anwendbarkeit des Kriteriums ist, daß unter den vorstehend angegebenen Bedingungen die maximale Quellung des OCP erreicht wird.

Auch Gemische aus den vorstehend beschriebenen Lösungsmitteln kommen für das Trägersystem infrage. Der Anteil des Lösungsmittelsystems L an den erfindungsgemäß konzentrierten Polymerisatdispersionen kann z.B. 80, in besonders günstigem Fall bis herab zu 20 Gew.-% betragen, vorzugsweise unter 70, praktisch meist 55 bis 40 Gew.-%.

Herstellung der heißsiegelfähigen Beschichtungsmassen

Mit Hilfe eines geeigneten Emulgators wird, wie vorstehend erläutert, eine Dispersion oder bei geeigneter Abstimmung der Polymerverträglichkeit eine homogene Lösung der Komponente A im Lösungsmittelsystem L hergestellt und hierauf unter geeigneten Reaktionsgedingungen die Komponente X aufgepfropft. Im allgemeinen stehen die Anteile von A und X in Gewichtsverhältnissen von 1 zu 5 bis 5 zu 1. Der Gehalt des gesamten Polymerisats bezogen auf die gesamte Dispersion beträgt mindestens 10 Gew.-%, wobei in der Praxis 40 bis 80 Gew.-% angestrebt werden, im Normalfall 45 bis 60 Gew.-%.

Nach dem erfindungsgemäßen Verfahren werden heißsiegelfähige Beschichtungsmassen in Dispersion erhalten, die eine ausreichende Stabilität für den Verarbeitungsprozeß besitzen. Die Stabilität der Dispersionen beträgt mindestens mehrere Tage, im Normalfall mehrere Wochen bis Monate.

Verfahren zur Heißsiegelung

Die Heißsiegelverfahren der Technik ermöglichen die Anwendung der erfindungsgemäßen heißsiegelfähigen Beschichtungsmittel, welche sich auf verschiedenen in Frage kommenden Untergründen anwenden lassen, beispielsweise auf Metallen, Kunststoffen, Glas, Papier, Textilien und anderen. Der Auftrag kann ebenfalls mit den bekannten Verfahren vorgenommen werden, beispielsweise mit Hilfe des Walzverfahrens im technischen Maßstab oder mit einer Aufziehrakel (Handcoater), wobei das Lösungsmittelsystem L beim und/oder nach dem Auftragen durch Verdampfen mittels Luftzirkulation und Wärmezufuhr entfernt wird. Vorteilhaft ist eine abschließende Erwärmung im Trockenofen oder in einem Wärmetunnel, wobei die Temperatur sich nach der Natur des Untergrunds und nach dem verwendeten Lösungsmittel richtet und im allgemeinen im Bereich zwischen 100 und 200 Grad C liegt.

Als Richtwert für die Erwärmungszeiten kann ein Bereich zwischen 20 Sekunden und mehreren Minuten angenommen werden, sie liegen im allgemeinen um 1 Minute. Bei der Metallbeschichtung kann auch mit einem auf die benötigte Temperatur aufgeheizten Kalander gearbeitet werden, wobei sich als Ergebnis ein Oberflächenfilm ausbildet.

Der Auftrag wird so bemessen, daß die gewünschte Schichtdicke entsteht. Sie liegt in der Regel im Bereich zwischen 1 und 15 μm, vorzugsweise zwischen 2 und 10 μm.

Die angewendeten Bedingungen bei der Heißsiegelung (z.B. Druck und Temperatur) hängen in gewissem Umfang von der Natur der Untergründe und der spezifischen Beschichtung ab. Die Siegelzeiten sind gewöhnlich sehr kurz, sie liegen im Bereich zwischen Sekundenbruchteilen und mehreren Sekunden. Je nach Bedingungen kann auf abzugsfähige oder nicht mehr abzugsfähige Beschichtungen hingearbeitet werden, wobei höhere Temperaturen im allgemeinen eine feste Verankerung der Beschichtung begünstigen.

Beispielsweise liegt die Heißsiegeltemperatur für Polyethylen gewöhnlich im Bereich zwischen 160 und 210 Grad C, für Polypropylen zwischen 180 und 250 Grad C, der Siegeldruck liegt überwiegend im Bereich 1 bis 10 kp/cm$^2$, vorzugsweise im Bereich 3 bis 6 kp/cm$^2$.

Vorteilhafte Wirkungen der Erfindung

Die erfindungsgemäßen heißsiegelfähigen Beschichtungmassen eignen sich unter anderem zur Versiegelung von Metalluntergründen, insbesondere von Aluminium, mit einer Reihe von Kunststoffen, wie beispielsweise Polystyrol, Polyvinylchlorid und Polypropylen. Desweiteren kann das erfindungsgemäße Beschichtungsmittel auch zur Versiegelung von Aluminium gegen Glas eingesetzt werden.

Von Vorteil ist, daß man bei der Anwendung der erfindungsgemäßen Beschichtungsmittel auf Metalluntergründen, wie insbesondere Aluminium, vollständig auf die Grundierung des Metalluntergrunds mit einem Primer verzichtet. Dies bedeutet einen Verzicht auf den zusätzlichen Arbeitsschritt des Aufbringens des Primers auf den Metalluntergrund und

einen Verzicht auf den Primer selbst, der meistens aus carboxylgruppenhaltigen PVC-Copolymeren (Vinylchlorid/Vinylacetat-Copolymere, z.B. VINYLITE ® VMCH von Fa. Union Carbide) besteht. Damit entfällt das Problem des Recyclings oder der Entsorgung chlorhaltiger Abfälle. Ein weiterer Vorteil der vorliegenden Erfindung ist die ausgezeichnete Wasserfestigkeit der erfindungsgemäßen Heißsiegelbeschichtungen, insbesondere wenn Heißsiegelnähte einer längeren Wasserlagerung ausgesetzt werden. Darüber hinaus zeichnen sich die erfindungsgemäß ausgeführten Beschichtungen durch eine ausgezeichnete Siegelnahtfestigkeit bei Trockenlagerung, eine gute Abzugsfestigkeit sowie eine sehr gute Blockfestigkeit und Wärmestandfestigkeit aus.

Die folgenden Beispiele dienen zur Erläuterung der Erfindung, sollen aber nicht einschränkend wirken.

BEISPIELE

Herstellung eines heißsiegelfähigen Beschichtungsmittels (Heißsiegellack)

**Beispiel 1**

Herstellung des Emulgators

In einem Witt'schen Topf mit Blatt-Rührer, Thermometer und Rückflußkühler, werden 106 g einer ca. 47 %igen Lösung eines Pfropfcopolymers aus einem Ethylen-Propylen-Copolymeren (55 : 45)[1)], 74 g eines Ethylen-Propylen-Copolymeren (55 : 45)[1)] und 252 g Butylacetat vorgelegt, mit 280 UpM gerührt, auf 105 - 110 Grad C aufgeheizt und mit Trockeneis entgast. Nach 2 Stunden werden 1,5 g tert.-Butylperoctoat zur Vorlage gegeben und anschließend wird mit dem Zulauf aus 148 g Methylmethacrylat, 148 g Butylmethacrylat und 4,5 g tert.-Butylperoctoat als Mischung begonnen. Nach 3 Stunden Zulaufdauer und 1 Stunde nach Zulaufende gibt man 0,6 g tert.-Butylperoctoat zu und hält die Temperatur weitere 7 Stunden bei 105 - 110 Grad C. Während der gesamten Reaktionszeit wird ständig gasförmiger Stickstoff übergeleitet. Die nach Polymerisationsende auf Raumtemperatur abgekühlte Lösung wird mit Butylacetat auf ca. 35 % verdünnt. Das Produkt ist bläulich, milchig trüb. Die Viskosität (ca. 35 %ig) liegt bei ca. 1 000 - 2 000 mPa·s.

1) z.B. Produkt ORTHOLEUM® 2052, Fa. DuPont; Molekulargewichtskenngröße: ca. 11 $mm^2/s$ Mooney-Viskositäts ML (1 + 4) 100 Grad C: ca. 25, oder Buna® APBA 644, Fa. Bunawerke Hüls GmbH; Mooney-Viskosität ML (1 + 4) 100 Grad C: ca. 35.

Die Viskositätsbestimmung erfolgte mit einem Brookfield-Viskosimeter nach DIN 51 398.

Die Mooney-Viskosität ML wurde nach DIN 53 523, Tb. 1 - 4 bei 100 Grad C bestimmt.

**Beispiel 2**

Herstellung der Dispersion

363 g des Emulgators aus Beispiel 1 und 317 g Butylacetat werden in der gleichen Apparatur (s. oben) vorgelegt, mit Trockeneis versetzt und auf ca. 105 - 110 Grad C bei 150 UpM erhitzt. Nach 1 Stunde werden 320 g eines Ethylen-Propylen-Copolymeren (70 : 30) mit Dienzusatz (2,5 C=C-Bindungen auf 1 000 C-Atome; Produkt BUNA ® 437 der Bunawerke Hüls GmbH) eingerührt. Nach Erreichen der Temperatur wird 10 Stunden bei 150 UpM dispergiert.

Während der gesamten Polymerisationszeit wird auch hier Stickstoff übergeleitet. Die erhaltene Dispersion ist blaugrau bis grauweiß. Der Feststoffgehalt liegt bei ca. 45 %, die Viskosität bei ca. 50 - 300 mPa·s.

**Beispiel 3**

Lackherstellung (Pfropfung)

673 g der Dispersion aus Beispiel 2 und 169 g Methylethylketon werden in der gleichen Apparatur vorgelegt, Trockeneis zugesetzt und bei 100 UpM auf 85 Grad C aufgeheizt. Danach beginnt man mit dem Zulauf einer Mischung aus 65.9 g Methylmethacrylat, 55,3 g Butylmethacrylat, 5,3 g Methacrylsäure, 5,3 g Acrylsäure und 1,3 g tert.-Butylperoctoat. Die Zulaufdauer beträgt 1 Stunde. Bei Zulaufende, sowie 2 Stunden nach Zulaufende wird mit je 0,3 g tert.-Butylperoctoat nachinitiiert und 6 weitere Stunden bei 85 Grad C gehalten. Während der gesamten Polymerisation wird Stickstoff übergeleitet. Das erhaltene Produkt ist bläulich-weiß, dispers. Der Feststoffgehalt liegt bei ca. 45 %, die Viskosität bei ca. 400 - 2 000 mPa·s.

Anwendung des heißsiegelfähigen Beschichtungsmittels nach den Beispielen 1 bis 3

**Beispiel 4**

Eine etwa 40 um starke Aluminiumfolie wird mit Hilfe einer Spiralrakel mit einem Heißsiegellack der unten genannten Zusammensetzung mit einer Trockenschichtdicke von 7 bis 9 µm beschichtet.

| | |
|---|---|
| Heißsiegellack: | 65 Gew.-% der gemäß Beispiel 3 hergestellten Dispersion |
| | 35 Gew.-% Methylethylketon |

Nach Verdunsten des Lösungsmittels wird die Aluminiumfolie 1 min bei 180 Grad C im Labortrockenofen getrocknet.

Die so beschichtete Aluminiumfolie wurde mit einem Laborheißsiegelgerät der Firma Brugger gegen Folien aus unbehandeltem Polypropylen (PP), Polystyrol (PS) und Polyvinylchlorid (PVC) unter folgenden Bedingungen gesiegelt:

| | PP, PVC, PS |
|---|---|
| Siegeltemperatur (Grad C) | 200 |
| Siegeldruck (kp/$cm^2$) | 6 |
| Siegelzeit (Sekunden) | 1 |

Die bei Normalklima (23 Grad C, 50 % rel. Luftfeuchte) gelagerten Proben werden in 15 mm breite Streifen geschnitten und in der Zugprüfmaschine nach DIN 51 221 geprüft. Als Siegelnahtfestigkeit wird die zum Trennen der Verbundfolie erforderliche Kraft, die sogenannte Abzugsfestigkeit in N pro 15 mm bzw. 25 mm Streifenbreite angegeben.

Zur Ermittlung der Wärmestandfestigkeit wird die versiegelte Kunststoff-Folie in ihrem freien Ende in einem Labortrockenofen bei 60 Grad C aufgehängt und das freie Ende der Aluminiumfolie mit einem 200 g-Gewicht belastet.

Gute Wärmestandfestigkeit ist vorhanden, wenn die Haftung zwischen Aluminium und Kunststoff nach 1-stündiger Lagerung unter genannten Bedingungen nicht verlorengeht.

| Untergrund | Wärmestandfestigkeit | Siegelnahtfestigkeit (N) | |
|---|---|---|---|
| | | trocken | nach 28 Tagen Wasserlagerung |
| PP | gut | 8,5 | 7,0 |
| PS | gut | 14,7 | 10,9 |
| PVC | gut | 11,0 | 10,5 |
| Vergleichsbeispiel nach Beispiel 6 aus EP 129 178: | | | |
| PP | gut | 7,6 | 5,0 |
| PS | gut | 8,3 | 4,7 |
| PVC | gut | 7,9 | 3,3 |

**Patentansprüche**

**1.** Verwendung von Beschichtungsmitteln, bestehend aus einer filmbildenden Dispersion, aufgebaut aus mindestens zwei verschiedenen Polymertypen, die unterschiedliche Hafteigenschaften aufweisen:

A: einem Polyolefin, einem Olefincopolymerisat, einem hydrierten Polyisopren oder einem hydrierten Copolymerisat aus Butadien und Isopren, ohne Säure- oder anderen haftvermittelnden Gruppen und

X: einem Acrylharz, aufgebaut aus mindestens 50 Gew.%, vorzugsweise mindestens 80 Gew.-% aus Monomereinheiten der Formel II:

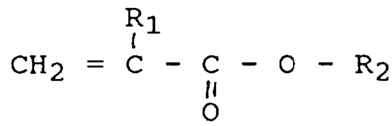 (II)

worin

$R_1$ für Wasserstoff oder Methyl, sowie
$R_2$ für einen Alkylrest, einen araliphatischen oder einen aromatischen Rest mit 1 bis 30 Kohlenstoffatomen

stehen können,
wobei der Polymertyp A frei von haftvermittelnden Gruppen, insbesondere von Säuregruppen ist und der Polymertyp X eine Säurezahl von maximal 120 mg KOH pro Gramm Polymerisat besitzt und wobei als säuregruppentragende Monomere Gemische aus Acrylsäure und Methacrylsäure im Verhältnis 1 : 5 bis 5 : 1 eingesetzt werden, in einem organischen Lösungsmittel L, wobei mindestens eine der Polymertypen mit dem organischen Lösungsmittel L unbegrenzt mischbar ist und wobei die Dispersion außer den beiden Polymertypen A und X ein Pfropf- oder Blockcopolymerisat der Formel I enthält:

$$A' - X' \quad (I)$$

worin A' für Pfropfäste oder Blöcke des Polymertyps A und
X' für Pfropfäste oder Blöcke des Polymertyps X

stehen,
wobei die Anteile von A und X im Pfropf- oder Blockcopolymerisat A'-X' im Gewichtsverhältnis 1 : 20 bis 20 : 1 stehen, zur Erzeugung von wasserfesten Siegelnähten zwischen Kunststoffuntergründen und Untergründen ausgewählt aus der Gruppe Kunststoffe, Metalle, Glas, Papier und Textilien ohne Verwendung zusätzlicher Primer für die zu beschichtenden Untergründe.

2. Verwendung von Beschichtungsmitteln gemäß Anspruch 1 zur Erzeugung von wasserfesten Siegelnähten zwischen Metalluntergründen oder Glasuntergründen und Kunststoffuntergründen.

3. Verwendung von Beschichtungsmitteln gemäß Anspruch 1 zur Erzeugung von wasserfesten Siegelnähten zwischen Metalluntergründen und Glasuntergründen.

4. Verwendung von Beschichtungsmitteln gemäß Anspruch 1 zur Erzeugung von wasserfesten Siegelnähten zwischen Metalluntergründen oder Glasuntergründen und Untergründen aus Kunststoffen, ausgewählt aus der Gruppe Polypropylen, Polystyrol und Polyvinylchlorid.

## Claims

1. Use of coating substances comprising a film-forming dispersion synthesised from at least two different polymer types which have different adhesive properties:

A: a polyolefin, an olefin copolymer, a hydrogenated polyisoprene or a hydrogenated copolymer of butadiene and isoprene, without any acid or other adhesion-promoting groups, and

X: an acrylic resin, synthesised from at least 50 wt.%, preferably at least 80 wt.%, of monomer units of formula II:

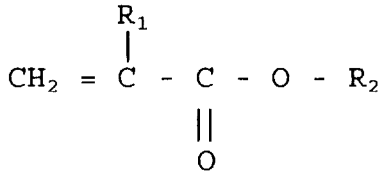 (II)

wherein

$R_1$ may be hydrogen or methyl, and
$R_2$ may be an alkyl group, an araliphatic or an aromatic group having 1 to 30 carbon atoms,

the polymer type A being free from adhesion-promoting groups, more particularly acid groups, and the polymer type X having an acid number of at most 120 mg KOH per gram polymer and mixtures of acrylic acid and methacrylic acid being used, in a ratio of 1 : 5 to 5 : 1, in an organic solvent as acid-carrying monomers, whilst at least one of the polymer types is freely miscible with the organic solvent L, and the dispersion contains, in addition to the two polymer types A and X, a graft or block polymer of formula I:

$$A' - X' \qquad (I)$$

wherein

A' represents graft branches or blocks of the polymer type A and
X' represents graft branches or blocks of polymer type X,

the amounts of A and X in the graft or block copolymer A'-X' being in a weight ratio of 1 : 20 to 20 : 1
to produce waterproof sealed seams between the plastic substrates and substrates selected from the group of plastic materials, metals, glass, paper and textiles, without any additional primer being used for the substrates to be coated.

**2.** Use of coating substances according to claim 1, to produce waterproof sealed seams between metal substrates or glass substrates and plastic substrates.

**3.** Use of coating substances according to claim 1, to produce waterproof sealed seams between metal substrates and glass substrates.

**4.** Use of coating substances according to claim 1, to produce waterproof sealed seams between metal substrates or glass substrates and substrates made of plastic materials selected from the group of polypropylene, polystyrene and polyvinylchloride.

## Revendications

**1.** Utilisation de produits d'enduction, se composant d'une dispersion filmogène composée d'au moins deux types de polymères différents qui presentent des propriétés d'adhérence différentes:

A: une polyoléfine, un copolymère d'oléfine, un polyisoprène hydrogéné ou un copolymère hydrogéné de butadiène et d'isoprène, sans groupements acides ni autres groupements produisant l'adhérence et
X: une résine acryiique, composée d'au moins 50% en poids, de préférence d'au moins 80% en poids de motifs monomères de formule II

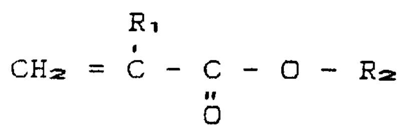

(II)

dans laquelle

$R_1$ peut être mis pour un atome d'hydrogène ou pour un reste méthyle, et
$R_2$ pour un reste alkyle, araliphatique ou aromatique à 1-30 atomes de carbone,

le type de polymère A étant dépourvu de groupements produisant l'adhérence, en particulier de groupements acides, et le type de polymère X ayant un indice d'acide de 120 mg de KOH/g de polymère au maximum, et des mélanges d'acide acrylique et d'acide méthacrylique dans un rapport de 1:5 à 5:1 étant utilisés comme monomères portant des groupements acides, dans un solvant organique L, l'un au moins des types de polymère étant miscible sans limite avec le solvant organique L, et la dispersion contenant, en plus des deux types de polymère A et X, un copolymère greffé ou séquence de formule I

$$A' - X' \qquad (I)$$

dans laquelle

A' est mis pour des greffons ou des séquences du type de polymère A et
X' est mis pour des greffons ou des séquences du type de polymère B,

les parts de A et X dans le copolymère greffé ou séquence A'-X' étant dans un rapport pondéral de 1:20 à 20:1, pour la formation de joints scellés résistants à l'eau entre des substrats de matière plastique et des substrats choisis dans le groupe des matières plastiques, des métaux, du verre, du papier ou des textiles, sans utilisation de couches de fond supplémentaires pour les substrats à enduire.

**2.** Utilisation de produits d'enduction selon la revendication 1 pour la formation de joints scellés résistants à l'eau entre des substrats métalliques ou des substrats de verre et des substrats de matière plastique.

**3.** Utilisation de produits d'enduction selon la revendication 1 pour la formation de joints scellés résistants à l'eau entre des substrats métalliques et des substrats de verre.

**4.** Utilisation de produits d'enduction selon la revendication 1 pour la formation de joints scellés résistants à l'eau entre des substrats métalliques ou des substrats de verre et des substrats en matières plastiques choisies dans le groupe du polypropylène, du polystyrène et du polychlorure de vinyle.